# EUROPEAN PATENT SPECIFICATION

(11) **EP 3 897 947 B1**
(45) Date of publication and mention of the grant of the patent: **30.11.2022**
(21) Application number: 18830281.4
(22) Date of filing: 21.12.2018
(51) Int. Cl.: B01F 23/232, B01F 25/10, B01F 25/433, B01F 33/81

(54) **VORTEX GENERATOR APPARATUS**
WIRBELGENERATOR
APPAREIL GÉNÉRATEUR DE VORTEX

(43) Date of publication of application: 27.10.2021
(73) Proprietor: National University of Ireland, Galway, H91 TK33 Galway (IE)
(72) Inventor: MULLIGAN, Sean, Sligo (IE); CLIFFORD, Eoghan, Galway (IE); CARTY, Alan, Sligo (IE)
(74) Representative: Appleyard Lees IP LLP
(86) International application number: PCT/EP2018/086801
(87) International publication number: WO 2020/126057

(56) References cited:
- CH-A- 545 649
- FR-A1- 2 307 570
- US-A1- 2004 026 328
- US-B1- 6 419 843

## Description

### FIELD

The present disclosure relates in general to a vortex generator apparatus.

In particular the disclosure is concerned with a vortex generator apparatus for mixing of fluids, and a fluid working system comprising a vortex generator apparatus.

### BACKGROUND

Effective mixing of different fluids is a requirement in various industries. For example, the mixing of a liquid and air (a process referred to as "aeration") may be utilised for enhanced combustion, or the mixing of particulates into a liquid as part of certain industrial processes. A particular example of fluid mixing relates to wastewater treatment which may involve aeration carried out in a biological treatment process. For example, US 6419843 B1 describes a sewer apparatus having a spiral channel to improve aeration of sewage. More generally, mixing may be carried out in the presence or absence of aeration as part of wastewater treatment to keep particles in suspension in, for example, an aerobic or anoxic treatment process.

Wastewater treatment is considered one of the largest energy demands in the public sector, responsible for an estimated one to two percent of worldwide electricity consumption. A portion of the energy demand relating to wastewater treatment may be attributed to comparatively low efficiency of mechanical aerators, such as surface aerators. This may result in high operational costs at a capacity insufficient to accommodate for increasing demand in view of growing populations.

Hence a vortex generator apparatus for mixing of fluids to achieve enhanced mixing is highly desirable.

### SUMMARY

According to the present disclosure there is provided an apparatus as set forth in the appended claims. Other features of the invention will be apparent from the dependent claims, and the description which follows.

Accordingly, there is provided an impeller-free vortex generator apparatus (100) for fluid mixing. It comprises a fluid tank (110) comprising a first fluid inlet port (112), the first fluid inlet port (112) comprising a curved flow channel (120) between a first sidewall segment (117) of the fluid tank (110) and a second sidewall segment (118) of the fluid tank (110). The fluid tank may further comprise a second fluid inlet port (113), and a fluid outlet port (114). There may also be provided a first fluid intake duct (130) in fluid communication with the first fluid inlet port (112). The first fluid intake duct (130) may be provided substantially on a tangent to the first sidewall segment (117) of the fluid tank (110) and aligned to deliver a first fluid to an internal surface (116) of the first sidewall segment (117).

According to some examples, the first fluid intake duct (130) is interfaced with an outer surface (119) of the fluid tank (110) to communicate the first fluid along the outer surface (119).

The vortex generator apparatus (100) comprises a fluid outlet duct (150) arranged in flow communication with the fluid outlet port (114), the fluid outlet duct (150) comprising: a divergent section (154), and a column section (156) in series with the divergent section (154), wherein the column section (156) has an internal diameter which is larger than the fluid outlet port (114).

According to some examples, the distance between the second fluid inlet port (113) and the fluid outlet port (114) is smaller than the distance between the fluid outlet port (114) and a duct exit (152) of the fluid outlet duct (150).

According to some examples, the second fluid inlet port (113), the fluid outlet port (114) and the duct exit (152) are arranged concentrically.

According to some examples, the column section (156) of the fluid outlet duct (150) has a length which is greater than the distance between the second fluid inlet port (113) and the fluid outlet port (114).

According to some examples, the fluid outlet duct (150) comprises a convergent section (158) in series with the column section (156).

According to some examples, the sidewall (115) of the fluid tank (110) defines a spiral centred on the fluid outlet port (114).

According to some examples, the first fluid intake duct (130) comprises a divergent section (132).

According to another example, there is provided a fluid working system (200) comprising a vortex generator apparatus (100) as described in preceding sections, wherein the vortex generator apparatus (100) comprises a valve (160) operable to control the flowrate through the second fluid inlet port (113), and the fluid working system (200) comprising a control system configurable to adjust the flowrate through the second fluid inlet port (113) by controlling the valve (160).

According to some examples, the control system is operable to fully close the second fluid inlet port (113).

According to some examples, the fluid working system (200) comprises a fluid pump (220) in flow communication with the first fluid inlet port (112), the control system configurable to adjust a flowrate through the first fluid inlet port (112) by controlling the fluid pump (220).

According to some examples, the fluid working system (200) comprises a first fluid reservoir (210) holding the first fluid (10), wherein the fluid outlet duct (150) is submerged in the first fluid (10).

According to some examples, the vortex generator (100) is wholly submerged in the first fluid (10), and the vortex generator (100) comprises a second fluid intake duct (170), wherein a first end of the second fluid intake duct (170) is connected to the second fluid inlet port (113) and a second end of the second fluid intake duct (170) is located outside of the first fluid (10).

According to some examples, the fluid working system (200) comprises a particle reservoir, and wherein the second fluid inlet port (113) is in flow communication with the particle reservoir.

### BRIEF DESCRIPTION OF DRAWINGS

For a better understanding of the invention, and to show how example embodiments may be carried into effect, reference will now be made to the accompanying drawings in which:
Figure 1 shows a side view of a vortex generator apparatus according to the present disclosure;
Figure 2 shows a top view of the vortex generator shown in Figure 1;
Figure 3 shows a sectional view of the vortex generator corresponding to Figure 1;
Figure 4 shows a partially cutaway view of the vortex generator corresponding to Figure 2;
Figure 5 illustrates a fluid working system comprising the vortex generator of Figure 1;
Figure 6 illustrates another fluid working system comprising another vortex generator according to the present disclosure;
Figure 7 shows sectional view of yet another vortex generator apparatus according to the present disclosure; and
Figure 8 shows a sectional view of a further vortex generator apparatus according to the present disclosure.

### DESCRIPTION OF EMBODIMENTS

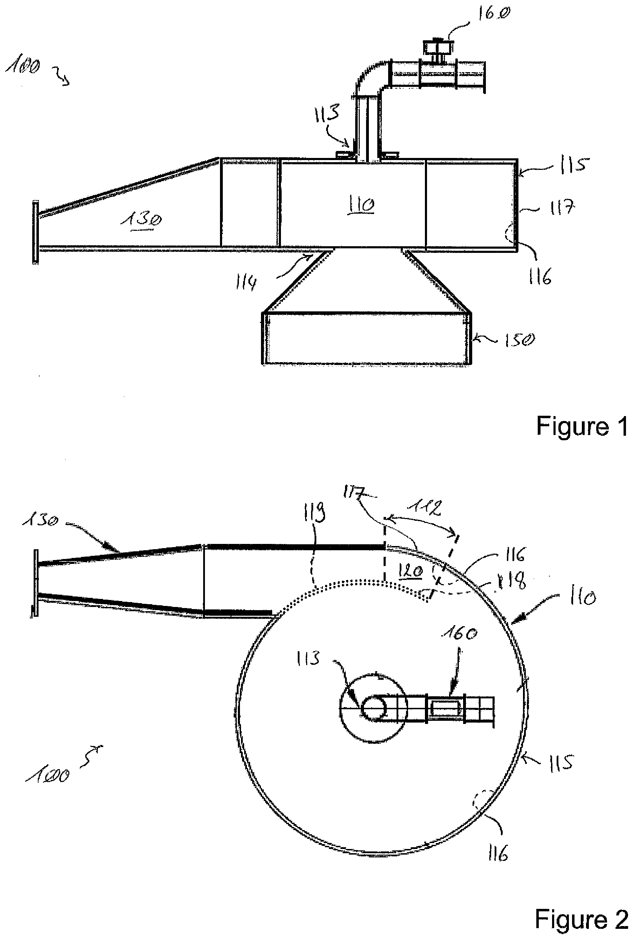

Figures 1 and 2 show different sectional views of a vortex generator apparatus 100 according to the present disclosure.

The vortex generator apparatus 100 is operational to mix fluids utilising a vortex generated by the vortex generator apparatus 100. The configuration of the vortex generator apparatus 100, which is described in greater detail below, is such that the vortex is generated and the fluids mixed despite the absence of an impeller in the vortex generator apparatus 100. An impeller, which is a rotor arranged to act on fluid or such that fluid acts on the rotor, is used in certain conventional vortex generators to generate a vortex or recover energy and to mix fluids, however the vortex generator apparatus 100 according to the present disclosure is "impeller-free".

The vortex generator apparatus 100 comprises a fluid tank 110. The fluid tank 110 (or "housing") defines a vortex chamber 111 arranged to separately receive fluids (for example, different fluids) and arranged to discharge said fluids together. The vortex chamber 111 of the fluid tank 110 defines the path of fluid, i.e. flow path, passing through the tank 110. The flow path through the vortex chamber 111 is a static flow path which differs from the flow path in a conventional vortex generator, where an impeller displaces fluid or fluid displaces the impeller, and so causes the flow path to change dynamically. That is to say, the flow path through the tank is defined by static (e.g. non rotatable) features (e.g. walls) which are fixed relative one another. The flow path through the tank may thus be defined only by static (e.g. non rotatable) features (e.g. walls) which are fixed relative one another.

The fluid tank 110 comprises a first fluid inlet port 112, a second fluid inlet port 113, and a fluid outlet port 114. The fluid tank 110 is arranged to receive the fluids to be mixed through the first fluid inlet port 112 and, separately, the second fluid inlet port 113, and to discharge said fluids through the fluid outlet port 114. The fluid tank 110 further comprises at least one sidewall 115 which defines the vortex chamber 111. The side wall has an inner/internal surface 116. Hence the internal surface 116 of the sidewall 115 bounds/defines the vortex chamber 111 (or "enclosed volume") defined by the fluid tank 110.

The first fluid inlet port 112 comprises a curved flow channel 120. The curved flow channel 120 is defined between a first sidewall segment 117 of the fluid tank 110 side wall 115 and a second sidewall segment 118 of the fluid tank 110 sidewall 115. That is to say, the curved flow channel 120 is bounded by the first sidewall segment 117 and the second sidewall segment 118 such that flow through the flow channel 120 is contained therein. Put another way, the first sidewall segment 117 and second sidewall segment 118 of the same sidewall 115 are arranged relative to one another to define the first fluid inlet port 112 to have a curved flow path (i.e. the curved flow channel 120).

With respect to the generally cylindrical geometry of the fluid tank 110, the first sidewall segment 117 is a radially outer sidewall segment, while the second sidewall segment 118 is a radially inner sidewall segment. That is to say, the first sidewall segment 117 is radially outward of the second sidewall segment 118. Accordingly, flow through the flow channel 120 is radially confined. Hence the flow channel 120 is configured to direct flow in a circumferential direction around the inner surface 116 of the sidewall 115.

The vortex generator apparatus 100 comprises a first fluid intake duct 130. The first fluid intake duct 130 is in fluid communication with the first fluid inlet port 112. Suitably, the first fluid intake duct 130 is coupled to, or formed integral with, the first fluid inlet port 112 to communicate fluid to the fluid tank 110. According to the present example, the first fluid intake duct 130 is straight, i.e. does not comprise curved sections.

The first fluid intake duct 130 may be interfaced with an outer surface 119 of the fluid tank 110 to communicate the first fluid along the outer surface 119. Put another way, the second sidewall segment 118 may extend from a portion of the side wall 115 which forms an interface with the first fluid intake duct 130, so that the outer surface 119 of the sidewall 115 extends to provide a flow surface of the flow channel 120.

The fluid intake duct 130 is provided substantially on a tangent to the sidewall 115 of the fluid tank 110 and aligned to deliver a first fluid to the internal surface 116 of the sidewall 115. The described arrangement causes a fluid injected through the first fluid inlet port 112 to swirl in the fluid tank 110, causing the formation of a vortex therein through the principles of circulation. According to the present example, the length of the sidewall 115 is such that the sidewall extends around the fluid rotational axis 140 for at least one full revolution. In other words, the arc-length of the sidewall 115 is such that the sidewall achieves at least one rotation.

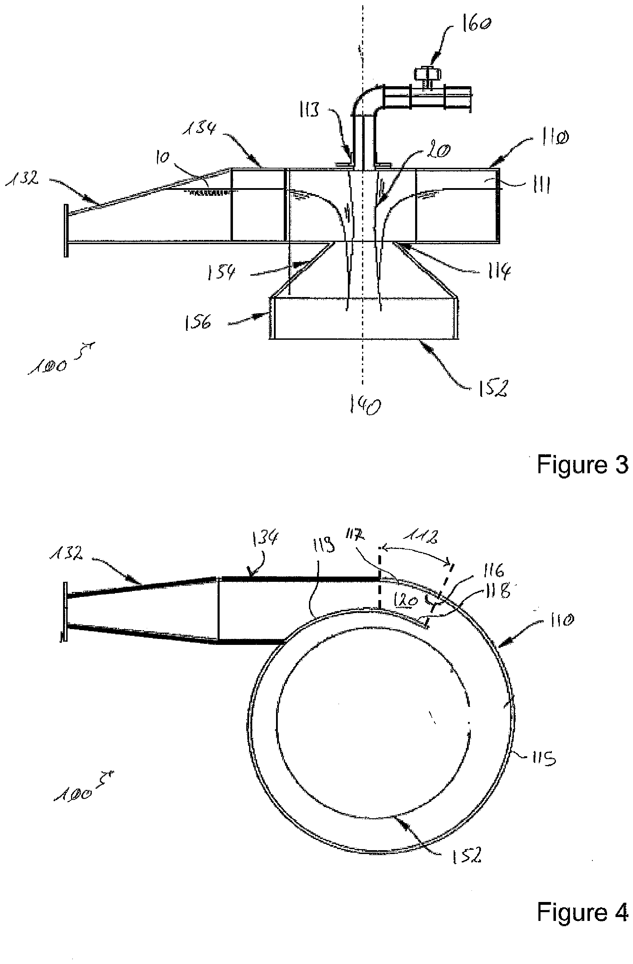

Figures 3 and 4 show partially cutaway views of the vortex generator apparatus 100. Figure 3 is a partially cutaway view of the corresponding to the view of Figure 1, while Figure 3 is a partially cutaway view corresponding to the view of Figure 2.

The fluid tank 110 is arranged generally symmetrical about a fluid rotational axis 140 about which the vortex is formed. In particular, the sidewall 114 is arranged to define a logarithmic spiral centred on the fluid rotational axis 140.

The sidewall 115 of the fluid tank 110 extends along the fluid rotational axis 140, and extends around the fluid rotational axis 140. More particularly, the sidewall 115 extends along the fluid rotational axis 140 for a length corresponding to the depth of the fluid tank 110, while the sidewall 115 extends around the fluid rotational axis 140 to fully enclose the fluid rotational axis 140. According to the present example, the sidewall 115 is curved to surround the fluid rotational axis 140 to define a generally cylindrical chamber 111. This enables the first sidewall segment 117 and second sidewall segment 118 of the same sidewall 115 to be arranged radially relative to one another to define the first fluid inlet port 112 to have a curved flow path (i.e. the curved flow channel 120). Each sidewall segment 117, 118 is curved about the fluid rotational axis 140. That is to say, the first sidewall segment 117 defines a first arc with a first radius, the second sidewall segment 118 defines a second arc with a second radius, the first radius being greater than the second radius so that the sidewall segments 117, 118 are radially spaced apart from another. This ensures that there is a good symmetric distribution of the tangential and radial velocities of the flow field in the radial direction and an even distribution of the velocity profiles in the vertical axis.

The sidewall 115 of the fluid tank 110 extends parallel to the fluid rotational axis 140, and the sidewall 115 extends around the fluid rotational axis 140 to define a spiral centred on the fluid rotational axis 140. That is to say, the separation between the sidewall 115 and the fluid rotational axis 140 differs for different angular positions around the fluid rotational axis. Thus a spiral may be defined, according to which the separation between the sidewall 115 and the fluid rotational axis 140 continuously decreases about the fluid rotational axis 140. The spiral may be, for example, a logarithmic spiral, an Achimedean spiral or a hyperbolic spiral.

The first fluid intake duct 130 is arranged to inject fluid into the fluid tank 110 so that a vortex is generated about the fluid rotational axis 140. The fluid intake duct 130 comprises a plurality of sections 132, 134. According to the present example, a first intake duct section 132 and a second intake duct section 134 are provided in series. The second intake duct section 134 is arranged to discharge fluid through the first fluid inlet port 112 into the fluid tank 110. More particularly, the second intake duct section 134 is arranged to engage the fluid tank 110 tangentially to the curvature of the sidewall 115 and terminates in the first fluid inlet 112.

The first intake duct section 132 (or "divergent intake duct section") is arranged such that the internal cross-section of the first intake duct section 132 increases along the direction of flow. Accordingly, the internal cross-section of the first intake duct section 132 increases towards the second intake duct section 134.

The second fluid inlet port 113 and the fluid outlet port 114 are arranged to be concentric. More particularly, the second fluid inlet port 113 and the fluid outlet port 114 are centred on the fluid rotational axis 140 at opposite ends of the fluid tank 110.

A fluid outlet duct 150 is provided in fluid communication with the fluid outlet port 114. The outlet duct 150 extends away from the fluid outlet port 114 to communicate fluid discharged from the fluid tank 110. That is to say, the outlet 150 is arranged to receive fluid from the fluid tank 110 and to discharge said fluid through a duct exit 152. Suitably, the first fluid intake duct 130 is coupled to, or formed integral with, the fluid outlet port 114.

Similar to the fluid tank 110, the fluid outlet duct 150 defines a static flow path. That is to say, no impeller is located downstream of the fluid outlet port 114. In other words, the fluid outlet duct 150 defines an empty channel configured to communicate fluids from the fluid tank 110. Put another way, the flow path through the fluid outlet duct 150 is defined by static (e.g. non rotatable) features (e.g. walls) which are fixed relative one another. The flow path through the fluid outlet duct 150 may thus be defined only by static (e.g. non rotatable) features (e.g. walls) which are fixed relative one another.

The fluid outlet duct 150 extends along the fluid rotational axis 140. The fluid outlet duct 150 has a length along the fluid rotational axis 140 which may be smaller than, larger than or approximately equal to the depth of the fluid tank 110. According to the present example, the fluid outlet duct 150 spans a larger distance along the fluid rotational axis 140 than the fluid tank 110. In other words, the length of the fluid outlet duct 150 is greater than the depth of the fluid tank 110.

The fluid outlet duct 150 comprises a divergent section 154 (or "divergent wall section") and a column section 156 (or "parallel wall section" / "cylindrical section"). The divergent section 154 is arranged such that the internal diameter of the outlet duct 150 increases downstream from the fluid outlet port 114, such that the downstream column section 156 has an internal diameter which is greater than the fluid outlet port 114. According to the present example, the divergent wall section 154 is frusto-conical.

The column section 156, which extends from the divergent section 154, is generally straight, neither converging nor diverging along the flow path. That is, the column section 156 forms a straight cylindrical boundary around the fluid rotational axis 140. In other words, the column section 156 has an internal diameter which is substantially constant along the column section 156.

The vortex generator apparatus 100 comprises a control valve 160 or other flow regulation device. The valve may be provided as any suitable type of flow control valve. For example, the valve may be provided as a quarter-turn ball valve or a butterfly valve, which may be provided with an electric actuator, such as a 0-to-90 degrees actuator, for closing.

The valve 160 is operable to control the flowrate through the second fluid inlet port 113. More particularly, the valve 160 is operable to close the second fluid inlet port 113 partially or completely to reduce the flowrate through the second fluid inlet port 113. That is to say, the valve 160 may be adjustable between an opened configuration, a partially closed configuration, and a fully closed configuration.

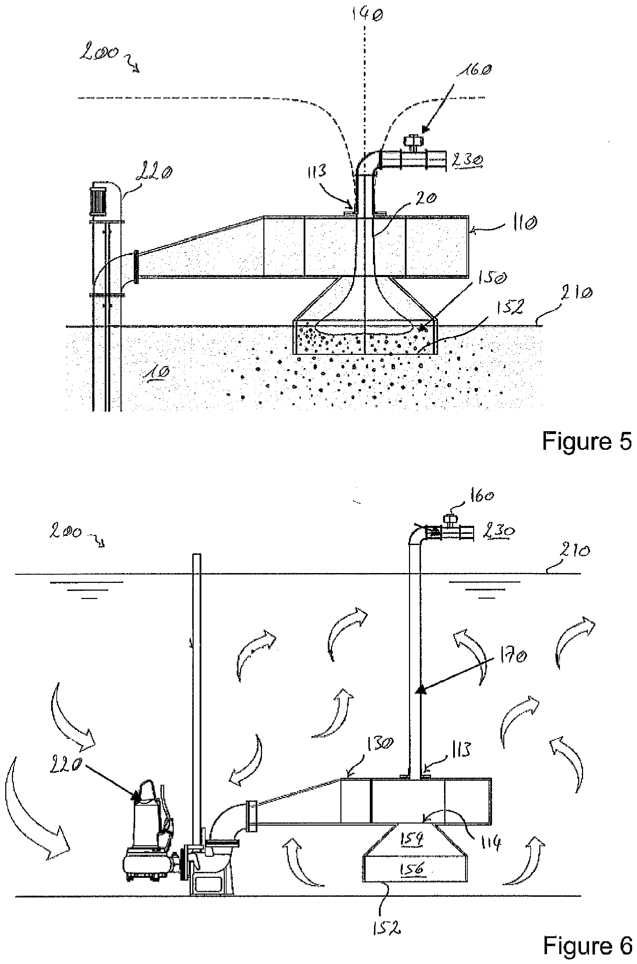

Figure 5 shows an exemplary fluid working system 200 comprising the vortex generator 100.

In the context of the present disclosure, a "fluid working system" is an assembly and/or arrangement in which work is done on fluids by a part of the system, and/or in which fluid works on a part of the apparatus or system. Put another way, a "fluid working system" is an assembly and/or arrangement in which fluids are processed by the system.

The vortex generator apparatus 100 of the fluid working system 200 may be utilised in a number of applications, wherein the mode of operation may vary dependent on the particular application.

The fluid working system 200 comprises a first fluid reservoir 210. The fluid working system 200 is a source of liquid such as, for example, a source of saline or wastewater. The fluid working system 200 further comprises a fluid pump 220. The fluid pump 220 is in fluid communication with the first fluid reservoir 210 and the first fluid intake duct 130 to extract fluid from the fluid reservoir 210. The fluid pump 220 may be provided as an axial or mixed flow pump. The fluid pump 220 may also be provided as a centrifugal pump or an ultra-low-head horizontal pump. The fluid pump 220 may utilise a variable speed drive for adjusting the flowrate.

The fluid working system 200 further comprises a second fluid reservoir 230, which in this example is the ambient atmosphere, and the second fluid inlet port 113 is provided in fluid communication with the second fluid reservoir 230.

The outlet duct exit 152 is submerged beneath the surface of the first fluid in the first fluid reservoir 210 to thereby deliver the mix of first fluid and second fluid to the first fluid reservoir 210. As can be seen, a vortex of liquid is formed with an air core extending there through, resulting in a discharge of aerated liquid from the outlet duct exit 152.

It is noted that the pump 220 may comprise an impeller. However, as the pump 200 is part of the larger fluid working system, as opposed to the vortex generator apparatus 100, said apparatus 100 remains impeller-free.

The fluid working system 200 comprises a control system 240. The control system 240 is configurable (e.g. operable) to adjust the flowrate through the first fluid inlet port 112, by suitably controlling the pump 220 to adjust the pumping rate.

The control system 240 is further configurable (e.g. operable) to adjust the flowrate through the second fluid inlet port 113, by suitably controlling the valve 160. In particular, the control system 240 may be configured (e.g. operable) to control the valve 160 to reduce the flowrate through second fluid inlet port 113 and, correspondingly, control the pump 220 to reduce the flowrate through the first fluid inlet port 112.

The control system 240 may be configurable (e.g. operable) to fully close the valve 160, thus stopping flow through the second fluid inlet port 113.

In operation, the first fluid 10, which is pumped by the fluid pump 220, is supplied to the first fluid intake duct 130. The first fluid 10 (or "primary fluid"), which is to be treated or mixed, travels through the fluid intake duct 130 and is delivered to the fluid tank 110. In particular, the first fluid intake duct 130 is provided substantially on a tangent to the sidewall 115 of the fluid tank 110 and aligned to deliver the first fluid 10 to the internal surface 116 of the sidewall 115. Thus, the first fluid 10 is subjected to swirl and circulation about the fluid rotational axis 140, promoting the formation of a vortex. As first fluid 10 travels through the first fluid inlet port 112, the first fluid 10 is confined to the curved flow channel 120 formed between the first sidewall segment 117 and the second sidewall segment 118 to aid the transition from the linear flow through the first fluid intake duct 130 and the vortex flow within the fluid tank 110. Accordingly, the curved flow channel 120 guides flow that is injected into the fluid tank 110, and the curved flow channel 120 separates the flow that is being injected into the fluid tank 110 from a vortex within the fluid tank 110.

The flow of first fluid 10 causes a pressure differential as a result of which the second fluid 20 (or "secondary fluid") is drawn into the fluid tank 110. That is to say, the second fluid 20 is drawn in under the action of the first fluid 10. This causes the first fluid 10 and the second fluid 20 to cooperate to generate a vortex about the fluid rotational axis 140.

The flow comprises a vortex of the first fluid 10 swirling around a central core of the second fluid 20, which is a quasi-cylindrical region centred over the outlet port 114. The vortex is maintained as the first fluid 10 and the second fluid 20 exit the fluid tank 110 through the fluid outlet port 114, such that the vortex also extends through the fluid outlet duct 150 in the form of an annular jet. More particularly, the outlet duct 150 maintains the stability of the vortex and channels it to the first fluid reservoir 210.

Ultimately, the mix of fluids 10, 20 passes through the duct exit 152. According to the present example, the duct exit 152 is located beneath the surface of the first fluid reservoir 210. Such an arrangement enables mixing and, as the case may be, aeration. With the duct exit 152 located beneath the surface of the first fluid 10, there is no aerodynamic connection between the second fluid inlet port 114 and the underside of the vortex.

Conversely, there is first fluid connection between the vortex chamber and the receiving fluid reservoir 210. Thus, as the first fluid 10 travels from the fluid tank 110, the annular jet entrains second fluid 20, which is further improved by the plunging annular jet inside the outlet duct 150.

Where the second fluid 20 is buoyant when submerged in the first fluid 10, such as in the case of air (i.e. second fluid) and wastewater (i.e. first fluid), a bubble column is formed within the outlet duct 150. The bubble column contains bubbles of the second fluid 20 which remain in suspension within the outlet duct 150 for a prolonged period of time, neither escaping through the duct exit 152 nor the fluid outlet port 114, to further improve mixing and mass transfer.

By controlling the valve 160, the flowrate of the second fluid 20 may be reduced to ensure optimised mixing ratio. Moreover, by fully closing the valve 160, the vortex generator apparatus 100 is brought from a first operation mode to a second operation mode. In the first operation mode, the vortex generator apparatus 100 carries out multi-phase fluid mixing, while in the second operation mode single-phase mixing (or "pure mixing") is carried out.

Where the valve 160 is partially or fully closed, the second fluid 20 cannot be replaced within the fluid tank 110 and the outlet duct 150. This results in the generation of a partial vacuum, causing the first fluid surface to rise within the fluid tank 110. Where the valve 160 is partially closed, this results in a limited multi-phase flow. Where the valve 160 is fully closed, a purely single-phase flow is generated.

According to the present disclosure, a vortex generator apparatus is provided with a fluid intake duct arranged tangentially to the fluid tank. This causes circulation of the first fluid within the fluid tank and results in the formation of a vortex. As a result, aspiration of the second fluid into the core of the vortex is caused and mixing of the first fluid and the second fluid provided.

Moreover, the vortex generator apparatus utilises a static geometry to generate the vortex. That is to say, the vortex generator apparatus is "impeller-free" as the specified configuration of the first fluid intake duct and the fluid tank suffices to generate a stable vortex. Accordingly, the vortex generator apparatus has simplified structure and fewer components, such that cost-efficiency of production of the vortex generator apparatus may be improved. Moreover, less maintenance work and repair may need to be undertaken, particularly with a view to maintenance work otherwise required to service an impeller, so that operational cost may also be reduced. Furthermore, efficiency of fluid mixing may be maintained comparatively longer than for a conventional apparatus utilising an impeller, because the impeller-free vortex generator apparatus is less prone to fouling and wear than a vortex generator with impeller.

Furthermore, by means of the curved flow channel an improved flow transition may be achieved. That is to say, the curved flow channel guides the flow received through the first fluid inlet duct to thereby change the flow properties of said flow to generate a vortex. For example, a linear flow from the first fluid inlet duct may thus be transitioned into a vortex flow. Additionally, the curved flow channel separates the flow inside the flow channel, i.e. flow in the process of transitioning, from the vortex within the fluid tank, i.e. flow that has transitioned.

Delivering the first fluid along the outer surface of the fluid tank results in the flow of first fluid travelling along the contours of the fluid tank. By imparting a flow path determined by the contours of the fluid tank the transition of flow of first fluid to a vortex flow may be further improved. In particular, said transition may therefore begin upstream of the first fluid inlet port.

A flow through the divergent section 154 will be slowed as a result of the expanding internal diameter of the divergent section 154, so that the flow remains in for an increased duration within fluid outlet duct 150 to ensure improved mass transfer conditions.

The length of the fluid outlet duct 150 affects the duration which the flow spends within the fluid outlet duct 150. By appropriately increasing the length of the fluid outlet duct 150, in comparison to the depth of the fluid tank 110 (i.e. the distance between the second fluid inlet port 113 and the fluid outlet port 114), mixing of fluids may be improved because the vortex generator apparatus 100 causes mixing of fluids within the fluid outlet port 150.

The second fluid inlet port 113 and the sidewall 115 centred on the fluid outlet port 114 may further improve the flow distribution and velocity to further improve the core that is generated.

The length of the column section 156 of the fluid outlet duct 150 may further improve fluid mixing within the vortex generator apparatus 100. In particular, by providing a column section 156 having a length which is greater than the depth of the fluid tank 110 (i.e. the distance between the second fluid inlet port 113 and the fluid outlet port 114), fluid mixing may be improved. Particularly where the fluid received through second fluid inlet port 113 is buoyant in the generated vortex, the column section 156 so extended may further improve mixing results.

The convergent section 158 downstream of the column section 156 functions by increasing the discharge velocity of the saturated fluid mixture as it is injected into the first fluid reservoir 210 to further promote mixing therein. The convergent section is positioned at a sufficient distance downstream of the divergent duct and column section such that the increase in velocity does not interfere with the previously mentioned mass transfer conditions. The convergent section also permits easy adaptation for downstream fluid streams and pipework accordingly.

Arranging the sidewall 115 to confine a flow through the fluid tank 110 along a spiral may improve the flow distribution and velocity so that a stable vortex and core may be generated. A logarithmic spiral may provide for a particularly even distribution of flow and velocity, further improving the stability of the vortex and core.

The divergent section 132 of the intake duct 130 provides for an inner cross-section which increases towards the first fluid inlet port 112, which may reduce energy losses to a flow entering the fluid tank 110. Additionally or alternatively, the divergent section 134 may reduce clogging and fouling of downstream portions of the vortex generator apparatus 100, such as the fluid tank 110.

By controlling the flowrate through the second fluid inlet port 113 it may be possible to adjust to optimised mixing ratios of the fluids being mixed. Thus, for instance, aeration of wastewater treatment may be improved to match the oxygen transfer to the actual oxygen demand. Particularly where the vortex generator 100 is operated at reduced capacity, optimised performance of the vortex generator 100 may thus be maintained in line with a reduction in flowrate and pump power.

By providing a valve which is operable to open and close, the system may operate in multi-phase mixing when the valve is open and, alternatively and single-phase mixing when the valve is fully closed.

By configuring the control system to control fluid intake through both fluid inlet ports 112, 113 it is possible to adjust fluid flow through the vortex generator apparatus (100), whilst maintaining high efficiency by ensuring optimised ratios of intake through the fluid inlet ports 112, 113. This may also permit strict control of second fluid mass transfer for mixing.

By locating the outlet duct 150 within the first fluid 10, and the second fluid inlet 113 outside of the first fluid 10, aerodynamic connection between the second fluid inlet 113 and the outlet duct 150 is prevented. The fluid mixing system 200 is therefore operable to generate a multi-phase flow or a single-phase flow by suitably controlling the flowrate through the second fluid inlet 113.

By providing a second fluid intake duct 170 which extends from a submerged vortex generator apparatus 100 to a second fluid reservoir 230, delivery of the second fluid 20 to a fully submerged vortex generator apparatus 100 is enabled.

The pressure differential causing fluid to be drawn in through the second fluid inlet port 113 may be utilised to draw particles from a particle reservoir (or "supply"). Such particles may be, for example, dissolved into fluids present within the vortex apparatus generator 100.

The fluid tank may be sealed so that it may be pressurised. In other examples the first fluid level in the tank may be such that fluid in the tank has a free-surface throughout.

The first fluid source may be a source of liquid, where the source is a free flowing (for example from a river, or down a duct from an elevated reservoir) or pumped under pressure source (for example from a pressurised or pumped source). The first fluid may also be a gas, delivered from a pressurised or pumped source. The second fluid source may be the local atmosphere/environment, drawing in gaseous air under the action of the first fluid, or a liquid held in a reservoir drawn into the fluid tank by the action of the first fluid, or gas or liquid from a pressurised or pumped source delivered into the fluid/swirl tank independent of the flow characteristics of the first fluid. The second fluid source may also comprise a supply of particles, such as powdered chemicals, which are drawn into the fluid tank alongside the second fluid.

Figure 6 shows another example of a fluid working system 200. This example system 200 differs from the system 200 of Figure 5 in that the vortex generator apparatus 100 is fully submerged in the first fluid 10. In this case, the secondary fluid inlet port 113 may be provided with an extended fluid intake duct 170 (or "second fluid intake duct"). The extended fluid intake duct 170 extends past the surface of the first fluid 10, allowing the second fluid 20 to be drawn into the vortex generator apparatus 100. Where the second fluid 20 is air, this enables the aspiration of air from the atmosphere above the free surface of the first fluid 10. Where no extended fluid intake duct 170 is provided and the vortex generator 100 fully submerged, the vortex generator 100 is arranged to mix the contents contained within the first fluid reservoir 210 in that the second fluid intake port 113 aspirates fluid from the regions above the vortex generator 100 and mixes with contents delivered through the first fluid intake port 112.

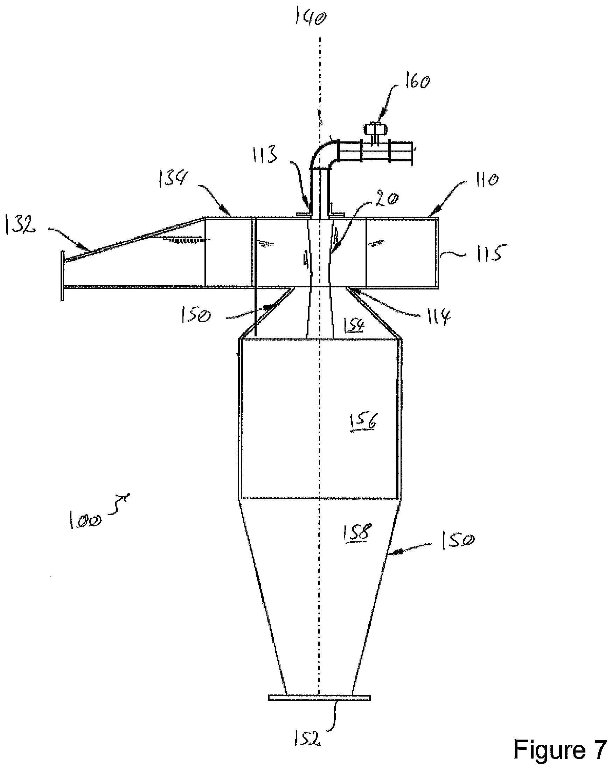

Figure 7 shows another example of a vortex generator apparatus 100. According to this example, the fluid outlet duct 150 is provided with an extended column section 156. That is to say, the column section 156 has a length which is greater than the depth of the fluid tank 110. In other words, the column section 156 has a length which greater than the distance between the fluid outlet port 114 and the second fluid inlet port 113.

The fluid outlet duct 150 comprises a convergent section 158. The convergent section 18 (or "convergent wall section") extends from the column section 156. The convergent section 158 is arranged such that the internal diameter of the outlet duct 150 decreases downstream from the column section 156, i.e. is getting narrower to the duct exit 152.

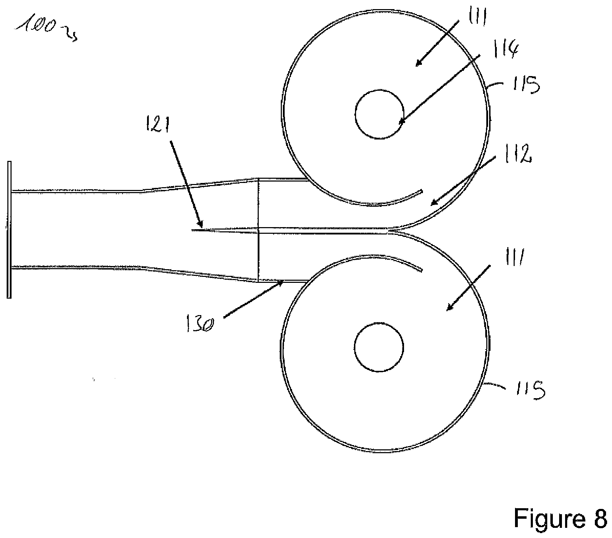

Figure 8 a further example of a vortex generator apparatus 100. According to preceding examples, the fluid tank 110 comprises a single vortex chamber 111. According to other examples, such as the example illustrated in Figure 8, multiple vortex chambers 111 are provided.

According to the example of Figure 8, the vortex generator apparatus 100 comprises two vortex chambers 111, each of which is configured to generate a vortex therein. According to this example, a flow splitter 121 is provided to divide the flow of first fluid 10 between the first vortex chamber 111 and the second vortex chamber 111. More particularly, the flow splitter 121 is provided as an upstream extension of the sidewalls 115 of the fluid tank 110 which define each vortex chamber 111.

In summary, exemplary embodiments of an impeller-free vortex generator apparatus and a system comprising said apparatus have been described. The described exemplary embodiments provide for an improved vortex generator for mixing of fluids.

Hence there is provided a system which achieves improved flow distribution, compared to examples of the related art, throughout the overall fluid tank both horizontally (radially) and vertically (axially). This is achieved because the fluid inlet port is configured and operable to provide a good transition from linear to vortex flow thus creating good symmetry in flow conditions radially in the flow field. It is further enabled because there is no discontinuity in the geometry in the vertical extent of the fluid tank which ensures that there is a good distribution of fluid dynamics in the axial direction within the fluid tank. These aspects limit energy losses and promote flow stability compared to examples of the related art.

The apparatus and the system may be manufactured industrially. An industrial application of the example embodiments will be clear from the discussion herein.

Although preferred embodiment(s) of the present invention have been shown and described, it will be appreciated by those skilled in the art that changes may be made without departing from the scope of the invention as defined in the claims.

## Claims

1. An impeller-free vortex generator apparatus (100) for fluid mixing, comprising:
a fluid tank (110) defined by a sidewall (115) and comprising:
a first fluid inlet port (112),
the first fluid inlet port (112) comprising a curved flow channel (120) defined between a first sidewall segment (117) of the fluid tank (110) sidewall (115) and a second sidewall segment (118) of the fluid tank (110) sidewall (115) ;
a second fluid inlet port (113), and
a fluid outlet port (114); and
a first fluid intake duct (130) in fluid communication with the first fluid inlet port (112);
wherein the first fluid intake duct (130) is provided substantially on a tangent to the first sidewall segment (117) of the fluid tank (110) sidewall (115) and aligned to deliver a first fluid to an internal surface (116) of the first sidewall segment (117);
**characterised in that** the vortex generator further comprises:
a fluid outlet duct (150) arranged in flow communication with the fluid outlet port (114), the fluid outlet duct (150) comprising:
a divergent section (154), and
a column section (156) in series with the divergent section (154),
wherein the column section (156) has an internal cross-sectional area which is larger than the internal cross-sectional area of the fluid outlet port (114).

2. The vortex generator apparatus (100) according to claim 1, wherein the first fluid intake duct (130) is interfaced with an outer surface (119) of the fluid tank (110) to communicate the first fluid along the outer surface (119).

3. The vortex generator apparatus (100) according to any preceding claim, wherein the distance between the second fluid inlet port (113) and the fluid outlet port (114) is smaller than the distance between the fluid outlet port (114) and a duct exit (152) of the fluid outlet duct (150).

4. The vortex generator apparatus (100) according to claim 3, wherein
the second fluid inlet port (113), the fluid outlet port (114) and the duct exit (152) are arranged concentrically.

5. The vortex generator apparatus (100) according to any preceding claim, wherein the column section (156) of the fluid outlet duct (150) has a length which is greater than the distance between the second fluid inlet port (113) and the fluid outlet port (114).

6. The vortex generator apparatus (100) according to any preceding claim, wherein
the fluid outlet duct (150) comprises a convergent section (158) in series with the column section (156).

7. The vortex generator apparatus (100) of any preceding claim, wherein
the sidewall (115) of the fluid tank (110) defines a spiral centred on the fluid outlet port (114).

8. The vortex generator apparatus (100) according to any preceding claim, wherein the first fluid intake duct (130) comprises a divergent section (132).

9. A fluid working system (200) comprising a vortex generator apparatus (100) according to any one of claims 1 to 8, wherein
the vortex generator apparatus (100) comprises a valve (160) operable to control the flowrate through the second fluid inlet port (113), and
the fluid working system (200) comprising a control system configurable to adjust the flowrate through the second fluid inlet port (113) by controlling the valve (160).

10. The fluid working system (200) according to claim 9, wherein the control system is operable to fully close the second fluid inlet port (113).

11. The fluid working system (200) according to claim 9 or 10, comprising
a fluid pump (220) in flow communication with the first fluid inlet port (112), the control system configurable to adjust a flowrate through the first fluid inlet port (112) by controlling the fluid pump (220).

12. The fluid working system (200) according to any one of claims 9 to 11, comprising a first fluid reservoir (210) holding the first fluid (10), wherein the fluid outlet duct exit (152) is submerged in the first fluid (10).

13. The fluid working system (200) according to claim 12, the vortex generator (100) is wholly submerged in the first fluid (10), and
the vortex generator (100) comprises a second fluid intake duct (170), wherein a first end of the second fluid intake duct (170) is connected to the second fluid inlet port (113) and a second end of the second fluid intake duct (170) is located outside of the first fluid (10).

14. The fluid working system (200) according to any one of claims 9 to 13, comprising a particle reservoir, and wherein the second fluid inlet port (113) is in flow communication with the particle reservoir.

## Patentansprüche

1. Impellerfreie Wirbelgeneratorvorrichtung (100) zum Mischen von Fluiden, umfassend:
einen Fluidtank (110), der durch eine Seitenwand (115) definiert ist und Folgendes umfasst:
eine erste Fluideinlassöffnung (112), wobei die erste Fluideinlassöffnung (112) einen gekrümmten Strömungskanal (120) umfasst, der zwischen einem ersten Seitenwandsegment (117) der Seitenwand (115) des Fluidtanks (110) und einem zweiten Seitenwandsegment (118) der Seitenwand (115) des Fluidtanks (110) definiert ist;
eine zweite Fluideinlassöffnung (113) und
eine Fluidauslassöffnung (114); und
eine erste Fluideinlassleitung (130) in Fluidverbindung mit der ersten Fluideinlassöffnung (112) ;
wobei die erste Fluideinlassleitung (130) im Wesentlichen auf einer Tangente zum ersten Seitenwandsegment (117) der Seitenwand (115) des Fluidtanks (110) bereitgestellt und dazu ausgerichtet ist, ein erstes Fluid an eine Innenoberfläche (116) des ersten Seitenwandsegments (117) bereitzustellen;
**dadurch gekennzeichnet, dass** der Wirbelgenerator ferner Folgendes umfasst:
eine Fluidauslassleitung (150), die in Strömungsverbindung mit der Fluidauslassöffnung (114) angeordnet ist, wobei die Fluidauslassleitung (150) Folgendes umfasst:
einen divergierenden Abschnitt (154), und
einen Säulenabschnitt (156) in Reihe mit dem divergierenden Abschnitt (154),
wobei der Säulenabschnitt (156) eine innere Querschnittsfläche hat, die größer ist als die innere Querschnittsfläche der Fluidauslassöffnung (114).

2. Wirbelgeneratorvorrichtung (100) nach Anspruch 1, wobei die erste Fluideinlassleitung (130) mit einer Außenoberfläche (119) des Fluidtanks (110) verbunden ist, um das erste Fluid entlang der Außenoberfläche (119) zu übertragen.

3. Wirbelgeneratorvorrichtung (100) nach einem der vorhergehenden Ansprüche, wobei der Abstand zwischen der zweiten Fluideinlassöffnung (113) und der Fluidauslassöffnung (114) kleiner ist als der Abstand zwischen der Fluidauslassöffnung (114) und einem Leitungsausgang (152) der Fluidauslassleitung (150).

4. Wirbelgeneratorvorrichtung (100) nach Anspruch 3, wobei
die zweite Fluideinlassöffnung (113), die Fluidauslassöffnung (114) und der Leitungsausgang (152) konzentrisch angeordnet sind.

5. Wirbelgeneratorvorrichtung (100) nach einem der vorhergehenden Ansprüche, wobei der Säulenabschnitt (156) der Fluidauslassleitung (150) eine Länge aufweist, die länger ist als der Abstand zwischen der zweiten Fluideinlassöffnung (113) und der Fluidauslassöffnung (114) .

6. Wirbelgeneratorvorrichtung (100) nach einem der vorhergehenden Ansprüche, wobei
die Fluidauslassleitung (150) einen konvergierenden Abschnitt (158) in Reihe mit dem Säulenabschnitt (156) umfasst.

7. Wirbelgeneratorvorrichtung (100) nach einem der vorhergehenden Ansprüche, wobei
die Seitenwand (115) des Fluidtanks (110) eine Spirale definiert, die auf der Fluidauslassöffnung (114) zentriert ist.

8. Wirbelgeneratorvorrichtung (100) nach einem der vorhergehenden Ansprüche, wobei die erste Fluideinlassleitung (130) einen divergierenden Abschnitt (132) umfasst.

9. Fluidarbeitssystem (200), umfassend eine Wirbelgeneratorvorrichtung (100) nach einem der Ansprüche 1 bis 8, wobei
die Wirbelgeneratorvorrichtung (100) ein Ventil (160) umfasst, das dazu betreibbar ist, die Durchflussrate durch die zweite Fluideinlassöffnung (113) zu steuern, und
wobei das Fluidarbeitssystem (200) ein Steuersystem umfasst, das dazu konfigurierbar ist, die Durchflussrate durch die zweite Fluideinlassöffnung (113) durch Steuern des Ventils (160) einzustellen.

10. Fluidarbeitssystem (200) nach Anspruch 9, wobei das Steuersystem dazu betreibbar ist, die zweite Fluideinlassöffnung (113) vollständig zu schließen.

11. Fluidarbeitssystem (200) nach Anspruch 9 oder 10, umfassend eine Fluidpumpe (220) in Strömungsverbindung mit der ersten Fluideinlassöffnung (112), wobei das Steuersystem dazu konfigurierbar ist, eine Durchflussrate durch die erste Fluideinlassöffnung (112) durch Steuern der Fluidpumpe (220) einzustellen.

12. Fluidarbeitssystem (200) nach einem der Ansprüche 9 bis 11, umfassend ein erstes Fluidreservoir (210), das das erste Fluid (10) enthält, wobei der Fluidauslassleitungsausgang (152) in das erste Fluid (10) eingetaucht ist.

13. Fluidarbeitssystem (200) nach Anspruch 12, wobei der Wirbelgenerator (100) vollständig in das erste Fluid (10) eingetaucht ist, und
der Wirbelgenerator (100) eine zweite Fluideinlassleitung (170) umfasst, wobei ein erstes Ende der zweiten Fluideinlassleitung (170) mit der zweiten Fluideinlassöffnung (113) verbunden ist und ein zweites Ende der zweiten Fluideinlassleitung (170) sich außerhalb des ersten Fluids (10) befindet.

14. Fluidarbeitssystem (200) nach einem der Ansprüche 9 bis 13, umfassend ein Partikelreservoir, und wobei die zweite Fluideinlassöffnung (113) in Strömungsverbindung mit dem Partikelreservoir steht.

## Revendications

1. Appareil générateur de vortex sans agitateur (100) pour mélanger du fluide, comprenant :
un réservoir de fluide (110) défini par une paroi latérale (115) et comprenant :
un premier orifice d'admission de fluide (112), le premier orifice d'admission de fluide (112) comprenant un canal d'écoulement incurvé (120) défini entre un premier segment (117) de paroi latérale de la paroi latérale (115) de réservoir de fluide (110) et un deuxième segment de paroi latérale (118) de la paroi latérale (115) de réservoir de fluide (110) ;
un deuxième orifice d'admission de fluide (113), et
un orifice d'évacuation de fluide (114) ; et
un premier conduit d'admission de fluide (130) en communication fluidique avec le premier orifice d'admission de fluide (112) ;
le premier conduit d'admission de fluide (130) étant prévu substantiellement sur une tangente au premier segment (117) de paroi latérale de la paroi latérale (115) de réservoir de fluide (110) et aligné pour distribuer un premier fluide à une surface interne (116) du premier segment de paroi latérale (117) ;
**caractérisé en ce que** le générateur de vortex comprend en outre :
un conduit d'évacuation de fluide (150) agencé en communication d'écoulement avec l'orifice d'évacuation de fluide (114), le conduit d'évacuation de fluide (150) comprenant :
une section divergente (154), et
une section de colonne (156) en série avec la section divergente (154),
la section de colonne (156) ayant une surface de section transversale interne qui est plus grande que la surface de section transversale interne de l'orifice d'évacuation de fluide (114).

2. Appareil générateur de vortex (100) selon la revendication 1, dans lequel le premier conduit d'admission de fluide (130) est interfacé avec une surface externe (119) du réservoir de fluide (110) pour communiquer le premier fluide le long de la surface externe (119).

3. Appareil générateur de vortex (100) selon l'une quelconque des revendications précédentes, dans lequel la distance entre le deuxième orifice d'admission de fluide (113) et l'orifice d'évacuation de fluide (114) est inférieure à la distance entre l'orifice d'évacuation de fluide (114) et une sortie de conduit (152) du conduit d'évacuation de fluide (150).

4. Appareil générateur de vortex (100) selon la revendication 3,
dans lequel le deuxième orifice d'admission de fluide (113), l'orifice d'évacuation de fluide (114) et la sortie de conduit (152) sont agencés de façon concentrique.

5. Appareil générateur de vortex (100) selon l'une quelconque des revendications précédentes, dans lequel la section de colonne (156) du conduit d'évacuation de fluide (150) a une longueur qui est supérieure à la distance entre le deuxième orifice d'admission de fluide (113) et l'orifice d'évacuation de fluide (114).

6. Appareil générateur de vortex (100) selon l'une quelconque des revendications précédentes, dans lequel le conduit d'évacuation de fluide (150) comprend une section convergente (158) en série avec la section de colonne (156).

7. Appareil générateur de vortex (100) selon l'une quelconque des revendications précédentes, dans lequel la paroi latérale (115) du réservoir de fluide (110) définit une spirale centrée sur l'orifice d'évacuation de fluide (114).

8. Appareil générateur de vortex (100) selon l'une quelconque des revendications précédentes, dans lequel le premier conduit d'admission de fluide (130) comprend une section divergente (132).

9. Système de travail de fluide (200) comprenant un appareil générateur de vortex (100) selon l'une quelconque des revendications 1 à 8,
l'appareil générateur de vortex (100) comprenant une valve (160) utilisable pour commander le débit à travers le deuxième orifice d'admission de fluide (113), et
le système de travail de fluide (200) comprenant un système de commande configurable pour ajuster le débit à travers le deuxième orifice d'admission de fluide (113) par commande de la valve (160).

10. Système de travail de fluide (200) selon la revendication 9, dans lequel le système de commande est utilisable pour fermer complètement le deuxième orifice d'admission de fluide (113).

11. Système de travail de fluide (200) selon la revendication 9 ou 10, comprenant
une pompe à fluide (220) en communication fluidique avec le premier orifice d'admission de fluide (112), le système de commande étant configurable pour ajuster un débit à travers le premier orifice d'admission de fluide (112) par commande de la pompe à fluide (220).

12. Système de travail de fluide (200) selon l'une quelconque des revendications 9 à 11, comprenant un premier réservoir de fluide (210) contenant le premier fluide (10), dans lequel la sortie de conduit d'évacuation de fluide (152) est immergée dans le premier fluide (10).

13. Système de travail de fluide (200) selon la revendication 12, le générateur de vortex (100) est entièrement immergé dans le premier fluide (10), et le générateur de vortex (100) comprend un deuxième conduit d'admission de fluide (170), dans lequel une première extrémité du deuxième conduit d'admission de fluide (170) est raccordée au deuxième orifice d'admission de fluide (113) et une deuxième extrémité du deuxième conduit d'admission de fluide (170) est située à l'extérieur du premier fluide (10).

14. Système de travail de fluide (200) selon l'une quelconque des revendications 9 à 13, comprenant un réservoir de particules, et dans lequel le deuxième orifice d'admission de fluide (113) est en communication fluidique avec le réservoir de particules.
